# EUROPEAN PATENT SPECIFICATION

(11) **EP 0 912 925 B1**
(45) Date of publication and mention of the grant of the patent: **29.03.2000**
(21) Application number: 96925345.9
(22) Date of filing: 16.07.1996
(51) Int. Cl.: G06F 9/38

(54) **A RETURN STACK STRUCTURE AND A SUPERSCALAR MICROPROCESSOR EMPLOYING SAME**
RÜCKSPRUNGSTAPELSPEICHERSTRUKTUR UND SUPERSKALENMIKROPROZESSOR MIT DERSELBEN
STRUCTURE DE PILE D'ADRESSES DE RETOUR ET MICROPROCESSEUR SUPERSCALAIRE COMPORTANT CETTE STRUCTURE

(43) Date of publication of application: 06.05.1999
(73) Proprietor: ADVANCED MICRO DEVICES INC., Sunnyvale, California 94088-3453 (US)
(72) Inventor: PICKETT, James, K., Austin, TX 78733 (US)
(74) Representative: Picker, Madeline Margaret
(86) International application number: US9611842
(87) International publication number: WO9802802

(56) References cited:
- GB-A- 2 287 111
- US-A- 5 274 817
- IBM TECHNICAL DISCLOSURE BULLETIN, vol. 28, no. 10, March 1986, ARMONK, US, pages 4635-4637, XP000616841 "Highly accurate subroutine stack prediction mechanism"
- IBM TECHNICAL DISCLOSURE BULLETIN, vol. 30, no. 11, 1 April 1988, pages 221-225, XP000097388 "Subroutine CALL/RETURN stack"

## Description

### 1. Field of the Invention

This invention relates to the field of superscalar microprocessors and, more particularly, to stack structures for subroutine return addresses employed within superscalar microprocessors.

### 2. Description of the Relevant Art

US-A-5 274 817 discloses a method for executing a subroutine in a computer which includes a memory and a stack. The memory has a plurality of sequentially ordered memory address locations referenced by respective address codes. The subroutine is stored in a preselected range of memory locations. The method includes storing a signature word on the stack, the signature word corresponding to an entry address code in memory for the subroutine; storing a return address on the stack, the return address code corresponding to a memory location where control is to be passed after execution of the subroutine; passing control to the subroutine entry address; executing the subroutine; comparing the signature word stored on the stack with the subroutine entry address code; passing control to the return address if the compared values are equal; and executing a software interrupt if the compared values are not equal.

Superscalar microprocessors achieve high performance by executing multiple instructions concurrently and by choosing the shortest possible clock cycle consistent with the design. As used herein, the term "clock cycle" refers to an interval of time in which the various stages of the instruction processing pipelines complete their tasks. Instructions and computed values are transferred to the next instruction processing pipeline stage at the end of the clock cycle.

Many superscalar microprocessor manufacturers design their microprocessors in accordance with the x86 microprocessor architecture. The x86 microprocessor architecture is widely accepted in the computer industry, and therefore a large body of software exists which runs only on microprocessors embodying this architecture. Microprocessors designed in accordance with the x86 architecture advantageously retain compatibility with this body of software. As will be appreciated by those skilled in the art, the x86 architecture includes a "stack" area in memory. The stack is useful for passing information between a program and a subroutine called by that program, among other things. A subroutine performs some function that a program requires, and then returns to the instruction following the call to the subroutine. Therefore, a subroutine may be called from multiple places within a program to perform its function.

In the x86 architecture, the ESP register points to the address in memory which currently forms the top of the stack. A stack structure is a Last-In, First-Out (LIFO) structure in which values which are placed on the stack in a certain order are removed from the stack in the reverse order. Therefore, the top of the stack contains the last item placed on the stack. The action of placing a value on the stack in known as a "push", and requesting that a push be performed is a "push command". The action of removing a value from the stack is referred to as a "pop", and requesting that a pop be performed is a "pop command". When a push command is performed, the ESP register is decremented by the size (in bytes) of the value specified by the push command. The value is then stored at the address pointed to by the decremented ESP register value. When a pop command is performed, a number of bytes specified by the pop command are copied from the top of the stack to a destination specified by the pop command, and then the ESP register is incremented by the number of bytes.

An example of the use of push and pop commands are the subroutine call and return instructions, as mentioned above. A typical subroutine call involves pushing the operands for the subroutine onto the stack, then pushing the address of the next instruction to be executed after the subroutine completes onto the stack. The subroutine is called and executes, accessing any operands it may need by indexing into the stack. After completing execution, the subroutine pops the next instruction address from the top of the stack and causes that address to be fetched by the microprocessor.

The x86 microprocessor architecture, similar to other microprocessor architectures, contains branch instructions. A branch instruction is an instruction which causes the next instruction to be fetched from one of at least two possible addresses. One address is the address immediately following the branch instruction. This address is referred to as the "next sequential address". The second address is specified by the branch instruction, and is referred to as the "branch target address" or simply the "target address". Branch instructions typically select between the target address and the next sequential address based on a particular condition flag which is set by a previously executed instruction.

Since the next instruction to be executed after the branch instruction is not known until the branch instruction executes, superscalar microprocessors must either stall instruction fetching until the branch instruction executes (reducing performance) or predict which address the branch instruction will select when executed. When the prediction method is chosen, the resulting superscalar microprocessor may speculatively fetch and execute instructions residing at the predicted address. If the prediction is incorrect (as determined when the branch instruction executes), then the instructions following the branch instruction are discarded from the instruction processing pipeline and the correct instructions are fetched. Branch predictions are typically made when a branch instruction is decoded or when instructions are fetched, depending on the branch prediction scheme and the configuration of the microprocessor.

A particularly difficult type of branch instruction to predict in the x86 microprocessor architecture is the RET/IRET instruction (or return instruction). The return instruction is a pop command, as described above. This type of branch instruction is difficult to predict because the target address (also referred to as the "return address") is not readily available when the instruction is decoded, unlike some other branch instructions. Instead, the return address is stored on the stack in a location that will be indicated by the value in the ESP register when the return instruction is executed. The value of the ESP register at the time the return instruction is decoded and the value of the ESP register at the time the return instruction is executed may differ.

Return address prediction is further complicated by the use of "fake return" instructions. Return instructions are normally used in conjunction with the CALL instruction. The CALL instruction is another special type of branch instruction which causes the address of the instruction immediately following the call to be pushed onto the stack, and then instructions are fetched from an address specified by the CALL instruction. The CALL instruction is therefore a push command, as described above, as well as a branch instruction. The instruction address placed on the stack by the CALL instruction is the address intended to be used by the return instruction as the return address. The CALL instruction can therefore be used to call a subroutine in a program, and the subroutine typically ends with a return instruction which causes instruction execution to resume at the instruction immediately following the CALL instruction.

"Fake return" instructions are return instructions which are executed when a return address other than a return address provided by a CALL instruction is at the top of the stack. This address may be placed on the stack by executing a PUSH instruction, for example. A mechanism for predicting the target address of the return instruction which handles the existence of fake return instructions is desired.

### SUMMARY OF THE INVENTION

The problems outlined above are in large part solved by a return stack in accordance with the present invention.

In accordance with a first aspect, the present invention provides a superscalar microprocessor having the features recited in accompanying claim 1.

In accordance with a second aspect, the present invention provides a method of operating a return stack having the features recited in accompanying claim 15.

The return stack disclosed herein stores return addresses associated with subroutine call instructions along with an ESP register value associated with the subroutine call instructions in a stack-type structure. During clock cycles that a return instruction is detected by a decode unit, the decode unit forwards an ESP register value associated with the return instruction to the return stack along with an indication of the return instruction detection. The return stack compares the forwarded ESP register value to the ESP register value stored on the top of the stack. If the values compare equal, then the value stored on the top of the stack may be the correct prediction address for this return instruction and is popped from the top of the stack. Therefore, the return stack advantageously allows prediction of return addresses which may lead to increased performance of a superscalar microprocessor.

The return stack disclosed herein further solves the problem of fake return instructions. If a fake return instruction popped the return stack, then the return stack would become corrupted. The return value for the fake return instruction is not stored on the return stack since it is not provided by a subroutine call instruction. By comparing the ESP register value associated with the return instruction to the ESP register value stored with the return address at the top of the stack, fake return instructions may be detected. Because the return value is stored on the stack pointed to by the ESP register at a different location then return addresses pushed onto the stack by subroutine call instructions, the ESP register value associated with the fake return instruction will differ from the ESP register value stored at the top of the return stack. Therefore, when the return stack detects an inequality between the two aforementioned ESP values, the return stack does not pop the top of the stack. A subsequent return instruction (which may be associated with the return address at the top of the return stack) may receive a correct prediction. The return stack may advantageously achieve a correct prediction rate substantially similar to the correct prediction rate in the absence of fake return instructions, even if fake return instructions are encountered.

The present invention contemplates a stack structure comprising a storage device, a stack control unit, and a comparator device. The storage device stores a plurality of stack values and a plurality of validation values. Each one of the plurality of validation values is associated with a particular one of the stack values. The stack control unit is configured to control a pointer value conveyed on a pointer conductor coupled to the storage device and to the stack control unit. The pointer value is indicative of a storage location within the storage device. Coupled to the storage device and to a current validation value bus is the comparator device. The comparator device is configured to compare one of the plurality of validation values stored within the storage device to a current validation value conveyed on the current validation value bus.

The present invention further contemplates a superscalar microprocessor comprising a branch prediction unit including a storage device, a stack control unit, and a comparator device. The storage device stores a plurality of return addresses and a plurality of stack pointer values. Each one of the plurality of stack pointer values is associated with a particular one of the return addresses. The stack control unit is configured to control a pointer value conveyed on a pointer conductor coupled to the storage device and to the stack control unit. The pointer value is indicative of a storage location within the storage device. Coupled to the storage device and to a current stack pointer bus is the comparator device. The comparator device is configured to compare one of the plurality of stack pointer values stored within the storage location indicated by the pointer value to a current stack pointer value conveyed on the current stack pointer bus.

The present invention still further contemplates a method of operating a return stack such that the return stack correctly predicts return addresses associated with a program executing on a superscalar microprocessor even if the program contains fake return instructions, comprising several steps. First, an address validation value associated with a return address is stored when the return address is pushed onto the return stack. Second, the address validation value is compared to a second address validation value conveyed with a stack pop command. Third, the return stack is popped if the comparison of the second step indicates equality.

### BRIEF DESCRIPTION OF THE DRAWINGS

Other objects and advantages of the invention will become apparent upon reading the following detailed description and upon reference to the accompanying drawings in which:

Figure 1 is a block diagram of a superscalar microprocessor including a branch prediction unit in accordance with the present invention.

Figure 2 is a diagram of the branch prediction unit shown in Figure 1, including a return stack and control mechanisms.

Figure 3 is a diagram of the fields within a storage location of the return stack shown in Figure 2.

Figure 4 is a diagram of another portion of the branch prediction unit shown in Figure 1, indicating branch prediction address selection mechanisms.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

### DETAILED DESCRIPTION OF THE INVENTION

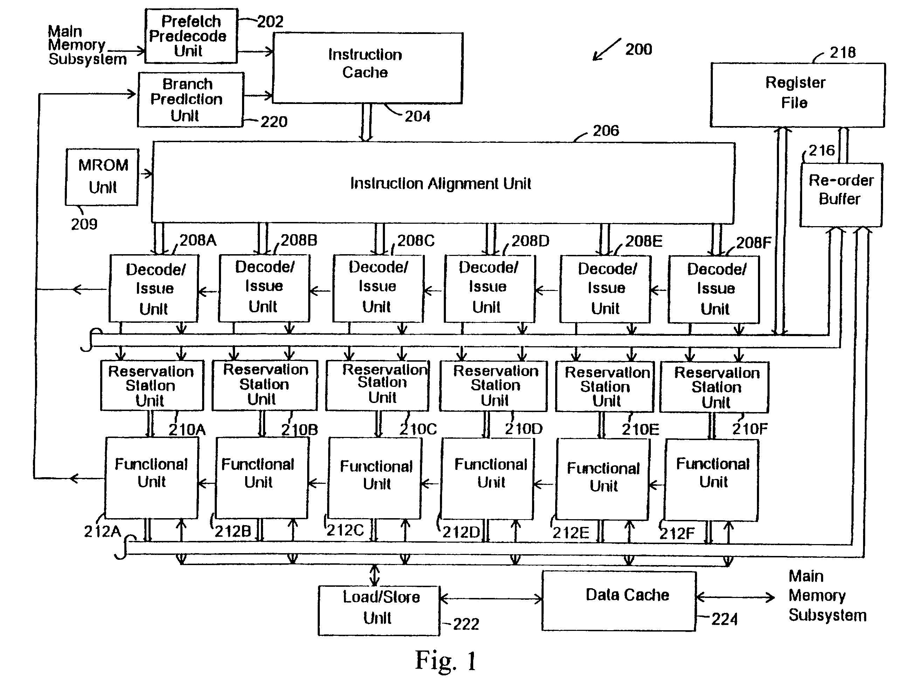

Turning now to Figure 1, a block diagram of a superscalar microprocessor 200 including a branch prediction unit 220 in accordance with the present invention is shown. As illustrated in the embodiment of Figure 1, superscalar microprocessor 200 includes a prefetch/predecode unit 202 and a branch prediction unit 220 coupled to an instruction cache 204. Instruction alignment unit 206 is coupled between instruction cache 204 and a plurality of decode units 208A-208F (referred to collectively as decode units 208). Each decode unit 208A-208F is coupled to respective reservation station units 210A-210F (referred to collectively as reservation stations 210), and each reservation station 210A-210F is coupled to a respective functional unit 212A-212F (referred to collectively as functional units 212). Decode units 208, reservation stations 210, and functional units 212 are further coupled to a reorder buffer 216, a register file 218 and a load/store unit 222. A data cache 224 is finally shown coupled to load/store unit 222, and an MROM unit 209 is shown coupled to instruction alignment unit 206.

Generally speaking, instruction cache 204 is a high speed cache memory provided to temporarily store instructions prior to their dispatch to decode units 208. In one embodiment, instruction cache 204 is configured to cache up to 32 kilobytes of instruction code organized in lines of 16 bytes each (where each byte consists of 8 bits). During operation, instruction code is provided to instruction cache 204 by prefetching code from a main memory (not shown) through prefetch/predecode unit 202. It is noted that instruction cache 204 could be implemented in a set-associative, a fully-associative, or a direct-mapped configuration.

Prefetch/predecode unit 202 is provided to prefetch instruction code from the main memory for storage within instruction cache 204. In one embodiment, prefetch/predecode unit 202 is configured to burst 64-bit wide code from the main memory into instruction cache 204. It is understood that a variety of specific code prefetching techniques and algorithms may be employed by prefetch/predecode unit 202.

As prefetch/predecode unit 202 fetches instructions from the main memory, it generates three predecode bits associated with each byte of instruction code: a start bit an end bit, and a "functional" bit. The predecode bits form tags indicative of the boundaries of each instruction. The predecode tags may also convey additional information such as whether a given instruction can be decoded directly by decode units 208 or whether the instruction must be executed by invoking a microcode procedure controlled by MROM unit 209, as will be described in greater detail below.

Table 1 indicates one encoding of the predecode tags. As indicated within the table, if a given byte is the first byte of an instruction, the start bit for that byte is set. If the byte is the last byte of an instruction, the end bit for that byte is set. If a particular instruction cannot be directly decoded by the decode units 208, the functional bit associated with the first byte of the instruction is set. On the other hand, if the instruction can be directly decoded by the decode units 208, the functional bit associated with the first byte of the instruction is cleared. The functional bit for the second byte of a particular instruction is cleared if the opcode is the first byte, and is set if the opcode is the second byte. It is noted that in situations where the opcode is the second byte, the first byte is a prefix byte. The functional bit values for instruction byte numbers 3-8 indicate whether the byte is a MODRM or an SIB byte, or whether the byte contains displacement or immediate data.

**Table 1.**

| Encoding of Start, End and Functional Bits | | | | |
|---|---|---|---|---|
| Instr. Byte Number | Start Bit Value | End Bit Value | Functional Bit Value | Meaning |
| 1 | 1 | X | 0 | Fast decode |
| 1 | 1 | X | 1 | MROM instr. |
| 2 | 0 | X | 0 | Opcode is first byte |
| 2 | 0 | X | 1 | Opcode is this byte, first byte is prefix |
| 3-8 | 0 | X | 0 | Mod R/M or SIB byte |
| 3-8 | 0 | X | 1 | Displacement or immediate data; the second functional bit set in bytes 3-8 indicates immediate data |
| 1-8 | X | 0 | X | Not last byte of instruction |
| 1-8 | X | 1 | X | Last byte of instruction |

As stated previously, in one embodiment certain instructions within the x86 instruction set may be directly decoded by decode units 208. These instructions are referred to as "fast path" instructions. The remaining instructions of the x86 instruction set are referred to as "MROM instructions". MROM instructions are executed by invoking MROM unit 209. More specifically, when an MROM instruction is encountered, MROM unit 209 parses and serializes the instruction into a subset of defined fast path instructions to effectuate a desired operation. A listing of exemplary x86 instructions categorized as fast path instructions as well as a description of the manner of handling both fast path and MROM instructions will be provided further below.

Instruction alignment unit 206 is provided to channel variable byte length instructions from instruction cache 204 to fixed issue positions formed by decode units 208A-208F. Instruction alignment unit 206 independently and in parallel selects instructions from three groups of instruction bytes provided by instruction cache 204 and arranges these bytes into three groups of preliminary issue positions. Each group of issue positions is associated with one of the three groups of instruction bytes. The preliminary issue positions are then merged together to form the final issue positions, each of which is coupled to one of decode units 208.

Before proceeding with a detailed description of the return address prediction preformed by branch prediction unit 220, general aspects regarding other subsystems employed within the exemplary superscalar microprocessor 200 of Figure 1 will be described. For the embodiment of Figure 1, each of the decode units 208 includes decoding circuitry for decoding the predetermined fast path instructions referred to above. In addition, each decode unit 208A-208F routes displacement and immediate data to a corresponding reservation station unit 210A-210F. Output signals from the decode units 208 include bit-encoded execution instructions for the functional units 212 as well as operand address information, immediate data and/or displacement data.

The superscalar microprocessor of Figure 1 supports out of order execution, and thus employs reorder buffer 216 to keep track of the original program sequence for register read and write operations, to implement register renaming, to allow for speculative instruction execution and branch misprediction recovery, and to facilitate precise exceptions. As will be appreciated by those of skill in the art, a temporary storage location within reorder buffer 216 is reserved upon decode of an instruction that involves the update of a register to thereby store speculative register states. Reorder buffer 216 may be implemented in a first-in-first-out configuration wherein speculative results move to the "bottom" of the buffer as they are validated and written to the register file, thus making room for new entries at the "top" of the buffer. Other specific configurations of reorder buffer 216 are also possible, as will be described further below. If a branch prediction is incorrect, the results of speculatively-executed instructions along the mispredicted path can be invalidated in the buffer before they are written to register file 218.

The bit-encoded execution instructions and immediate data provided at the outputs of decode units 208A-208F are routed directly to respective reservation station units 210A-210F. In one embodiment, each reservation station unit 210A-210F is capable of holding instruction information (i.e., bit encoded execution bits as well as operand values, operand tags and/or immediate data) for up to three pending instructions awaiting issue to the corresponding functional unit. It is noted that for the embodiment of Figure 1, each decode unit 208A-208F is associated with a dedicated reservation station unit 210A-210F, and that each reservation station unit 210A-210F is similarly associated with a dedicated functional unit 212A-212F. Accordingly, six dedicated "issue positions" are formed by decode units 208, reservation station units 210 and functional units 212. Instructions aligned and dispatched to issue position 0 through decode unit 208A are passed to reservation station unit 210A and subsequently to functional unit 212A for execution. Similarly, instructions aligned and dispatched to decode unit 208B are passed to reservation station unit 210B and into functional unit 212B, and so on.

Upon decode of a particular instruction, if a required operand is a register location, register address information is routed to reorder buffer 216 and register file 218 simultaneously. Those of skill in the art will appreciate that the x86 register file includes eight 32 bit real registers (i.e., typically referred to as EAX, EBX, ECX, EDX, EBP, ESI, EDI and ESP). Reorder buffer 216 contains temporary storage locations for results which change the contents of these registers to thereby allow out of order execution. A temporary storage location of reorder buffer 216 is reserved for each instruction which, upon decode, is determined to modify the contents of one of the real registers. Therefore, at various points during execution of a particular program, reorder buffer 216 may have one or more locations which contain the speculatively executed contents of a given register. If following decode of a given instruction it is determined that reorder buffer 216 has a previous location or locations assigned to a register used as an operand in the given instruction, the reorder buffer 216 forwards to the corresponding reservation station either: 1) the value in the most recently assigned location, or 2) a tag for the most recently assigned location if the value has not yet been produced by the functional unit that will eventually execute the previous instruction. If the reorder buffer has a location reserved for a given register, the operand value (or tag) is provided from reorder buffer 216 rather than from register file 218. If there is no location reserved for a required register in reorder buffer 216, the value is taken directly from register file 218. If the operand corresponds to a memory location, the operand value is provided to the reservation station unit through load/store unit 222.

Details regarding suitable reorder buffer implementations may be found within the publication "Superscalar Microprocessor Design" by Mike Johnson, Prentice-Hall, Englewood Cliffs, New Jersey, 1991, and within the co-pending, commonly assigned patent application entitled "High Performance Superscalar Microprocessor", Serial No. 08/146,382, filed October 29, 1993 by Witt, et al.

Reservation station units 210A-210F are provided to temporarily store instruction information to be speculatively executed by the corresponding functional units 212A-212F. As stated previously, each reservation station unit 210A-210F may store instruction information for up to three pending instructions. Each of the six reservation stations 210A-210F contain locations to store bit-encoded execution instructions to be speculatively executed by the corresponding functional unit and the values of operands. If a particular operand is not available, a tag for that operand is provided from reorder buffer 216 and is stored within the corresponding reservation station until the result has been generated (i.e., by completion of the execution of a previous instruction). It is noted that when an instruction is executed by one of the functional units 212A-212F, the result of that instruction is passed directly to any reservation station units 210A-210F that are waiting for that result at the same time the result is passed to update reorder buffer 216 (this technique is commonly referred to as "result forwarding"). Instructions are issued to functional units for execution after the values of any required operand(s) are made available. That is, if an operand associated with a pending instruction within one of the reservation station units 210A-210F has been tagged with a location of a previous result value within reorder buffer 216 which corresponds to an instruction which modifies the required operand, the instruction is not issued to the corresponding functional unit 212 until the operand result for the previous instruction has been obtained. Accordingly, the order in which instructions are executed may not be the same as the order of the original program instruction sequence. Reorder buffer 216 ensures that data coherency is maintained in situations where read-after-write dependencies occur.

In one embodiment, each of the functional units 212 is configured to perform integer arithmetic operations of addition and subtraction, as well as shifts, rotates, logical operations, and branch operations. It is noted that a floating point unit (not shown) may also be employed to accommodate floating point operations.

Each of the functional units 212 also provides information regarding the execution of conditional branch instructions to the branch prediction unit 220. If a branch prediction was incorrect, branch prediction unit 220 flushes instructions subsequent to the mispredicted branch that have entered the instruction processing pipeline, and causes prefetch/predecode unit 202 to fetch the required instructions from instruction cache 204 or main memory. It is noted that in such situations, results of instructions in the original program sequence which occur after the mispredicted branch instruction are discarded, including those which were speculatively executed and temporarily stored in load/store unit 222 and reorder buffer 216. Exemplary configurations of suitable branch prediction mechanisms are well known.

Results produced by functional units 212 are sent to the reorder buffer 216 if a register value is being updated, and to the load/store unit 222 if the contents of a memory location is changed. If the result is to be stored in a register, the reorder buffer 216 stores the result in the location reserved for the value of the register when the instruction was decoded. As stated previously, results are also broadcast to reservation station units 210A-210F where pending instructions may be waiting for the results of previous instruction executions to obtain the required operand values.

Generally speaking, load/store unit 222 provides an interface between functional units 212A-212F and data cache 224. In one embodiment, load/store unit 222 is configured with a load/store buffer with eight storage locations for data and address information for pending loads or stores. Decode units 208 arbitrate for access to the load/store unit 222. When the buffer is full, a decode unit must wait until the load/store unit 222 has room for the pending load or store request information. The load/store unit 222 also performs dependency checking for load instructions against pending store instructions to ensure that data coherency is maintained.

Data cache 224 is a high speed cache memory provided to temporarily store data being transferred between load/store unit 222 and the main memory subsystem. In one embodiment, data cache 224 has a capacity of storing up to eight kilobytes of data. It is understood that data cache 224 may be implemented in a variety of specific memory configurations, including a set associative configuration.

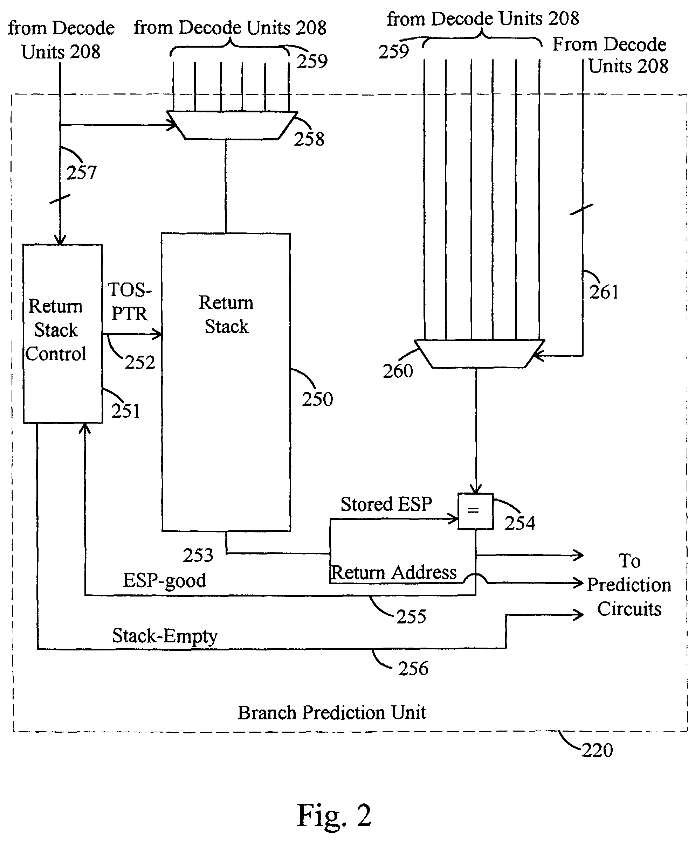

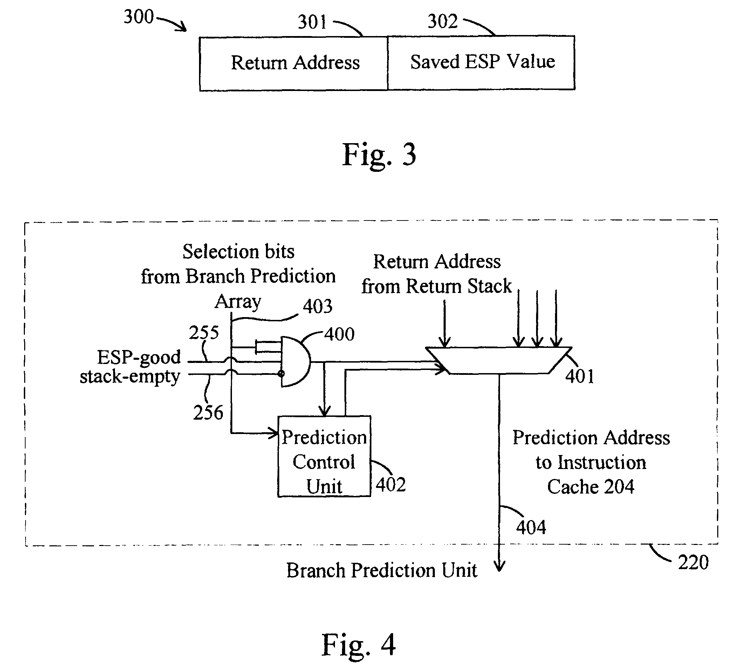

Turning now to Figure 2, a diagram of certain components within branch prediction unit 220 is shown. A return stack 250 is included in branch prediction unit 220 to store return addresses associated with subroutine call instructions that have been previously decoded. Also stored within return stack 250 is the value of the ESP register when the subroutine call instruction is executed. A return stack control unit 251 is also included, coupled to return stack 250. Return stack control unit 251 is configured to control a top-of-stack pointer (TOS pointer) conveyed on pointer conductor 252 to return stack 250. As the name implies, the TOS pointer conveys a value indicative of the top of the stack within return stack 250. This pointer causes the contents of the storage location indicated as the top of the stack to be conveyed on an output bus 253. Output bus 253 conveys a stored ESP value to a comparator device 254 and a return address to prediction circuits (shown in Figure 4) within branch prediction unit 220. The output of comparator device 254 is conveyed to return stack control unit 251 and to the prediction circuits on an ESP_good conductor 255.

Return stack control unit 251 is further configured to convey a stack empty signal on stack empty conductor 256 to the prediction circuits within branch prediction unit 220. Return stack control unit 251 additionally receives a subroutine call detection bus 257 from decode units 208. Each decode unit 208A-208F drives one conductor within subroutine call detection bus 257 with a signal indicative of the detection of a subroutine call instruction within that particular decode unit. Subroutine call detection bus 257 is further coupled to a multiplexor circuit 258 which is coupled to an input port on return stack 250. Multiplexor circuit 258 receives a plurality of ESP/return address buses 259 from decode units 208. Each decode unit 208A-208F provides the value of the ESP register associated with the instruction currently being decoded on a particular one of the plurality of ESP/return address buses 259, as well as a return address for a detected subroutine call instruction. In this way, a decode unit 208A-208F which detects a subroutine call instruction may provide the return address and the ESP register value associated with the subroutine call instruction to return stack 250.

A second multiplexor circuit 260 is also provided. Multiplexor circuit 260 is coupled to the plurality of ESP/return address buses 259 and to a return detection bus 261 provided by decode units 208. Each of decode units 208A-208F drive a conductor within return detection bus 261 with a signal indicative of a detected return instruction.

Generally speaking, return stack 250 is configured to store return addresses and ESP register values associated with subroutine call instructions in a LIFO stack format, and to provide the stack value (including the return address and ESP register value) to prediction circuits within branch prediction unit 220. Therefore, when branch prediction unit 220 predicts a return instruction, it will have an address to predict as the target address of the return instruction. The ESP register value is also stored to control the popping of the return stack. Ordinarily, the return stack would be popped whenever a return instruction is detected. However, if a return instruction is a "fake return" (in which the target address is not an address provided by a corresponding subroutine call instruction, as described above), then the return address for the fake return instruction is not stored on the return stack. Therefore, the return stack should not be popped and the return address is likely not a correct prediction for the fake return instruction.

Comparator device 254 provides a comparison between the return instruction ESP register value and the ESP register value stored with the return address that is currently residing at the top of the return stack. If the ESP register values compare equal, then the current return address may be the correct prediction for the return instruction. The result of the comparison is provided to the prediction circuits within branch prediction unit 220 for use in determining the branch prediction, and is further provided to return stack control unit 251 to control the popping of return stack 250. In this manner, fake return instructions are not predicted and the return stack is not corrupted by their presence in a program.

Return stack 250 is a storage device used to store return addresses and associated ESP register values. In one embodiment, return stack 250 is a linear array of storage locations. The array is indexed by the TOS pointer for writing of input values from multiplexor circuit 258 and for reading an output value onto output bus 253. In another embodiment, return stack 250 is a group of registers and input and output multiplexors. The output multiplexors are controlled by the TOS pointer such that only one register storing a return address and associated ESP register value is selected to convey its contents onto output bus 253 in a given clock cycle. Additionally, the input multiplexors are controlled by the TOS pointer such that only one register is written from the input port in a given clock cycle.

Return stack control unit 251 provides the TOS pointer to return stack 250. Return stack control unit 251 controls the TOS pointer by interpreting push commands (as conveyed on subroutine call detection bus 257) and pop commands (as conveyed on ESP_good conductor 255) associated with return stack 250. Each subroutine call instruction is a push command for return stack 250, and each return instruction which is determined not to be a fake return instruction is a pop command for return stack 250. The TOS pointer indicates which storage location within return stack 250 is storing the stack value which is currently the top of the stack. When a push command occurs, the values associated with the push command are stored in the storage location logically above the storage location indicated by the TOS pointer. At the end of the clock cycle, the TOS pointer is decremented such that the TOS pointer will indicate the new top of return stack 250 in the next clock cycle. When a pop command occurs, the TOS pointer is incremented such that the values that were formerly the top of the stack are no longer indicated as the top of the stack. Instead, storage location storing the value which was stored previous to the storing of the popped value is indicated as the top of the stack.

Additionally, return stack control unit 251 is configured to convey a stack empty signal to prediction circuits within branch prediction unit 220 on stack empty conductor 256. The stack empty signal may be used by the prediction circuits to withhold a prediction for a return address if the return address being conveyed on output bus 253 is invalid. In one embodiment, the stack empty signal is asserted when no valid return addresses are stored within return stack 250.

When a decode unit 208A-208F decodes a subroutine call instruction, it asserts a signal upon its conductor within subroutine call detection bus 257. Furthermore, it conveys the value the ESP register will contain after the subroutine call instruction is executed (which is indicative of the address at which the return address generated by the subroutine call instruction will be stored) as well as the return address associated with the subroutine call instruction to branch prediction unit 220 on one of the plurality of ESP/return address buses 259. The values conveyed on subroutine call detection bus 257 are used to select one of the plurality of ESP/return address buses 259 to convey an ESP register value and return address to return stack 250. In a given cycle, if more than one of the conductors within subroutine call detection bus 257 conveys a signal indicative of a detected subroutine call instruction, one ESP value and return address is stored. The value that is stored is the one associated with the highest priority decode unit. Decode unit 208A is assigned highest priority, decode unit 208B is assigned second highest priority, etc. This priority scheme is selected because in a given clock cycle, decode unit 208A is decoding an instruction which is prior to instructions in decode units 208B-208F in program order. Similarly, in a given clock cycle decode unit 208B is decoding an instruction which is prior to decode units 208C-208F in program order, etc.

The ESP value and return address associated with the first call instruction detected is saved, and others in that same clock cycle are ignored because the instructions in those decode units will be discarded when the subroutine call instruction executes, causing program execution to continue at the target address of the subroutine call instruction. Subroutine call detection bus 257 and multiplexor circuit 258 therefore form an input selection device for return stack 250. It is noted that other input selection devices may be used in other embodiments.

Comparator device 254 and the input selection device formed by multiplexor circuit 260 and return detection bus 261 form a validation circuit which validates a pop command conveyed from decode units 208. The ESP value stored with the return address at the top of return stack 250 is a validation value for the pop command. If a pop command is presented to the validation circuit along with an ESP value (associated with the return instruction that the particular decode unit detected) which matches the validation value, then the pop command is conveyed to return stack 250. Otherwise, the pop command is ignored. Therefore, fake return instructions do not destroy the contents of return stack 250. It is noted that other embodiments may implement different input selection devices and comparator devices than the embodiment shown in Figure 2. It is further noted that multiplexor circuit 260 is coupled only to the portion of the plurality of ESP/return address buses 259 which conveys ESP values. The return address portion of the plurality of ESP/return address buses 259 is not needed by comparator circuit 254, and is not valid for decode units which have decoded a return instruction.

A special situation occurs when a push command is received in a clock cycle in which each storage location within return stack 250 is storing a valid return address (i.e. return stack 250 is full). In one embodiment, this situation is handled by return stack control unit 251. Return stack control unit 251 stores the stack value associated with the push command into the storage location at the top of the stack after shifting the stack values in each storage location to the storage location which is logically below that storage location in the stack. In this manner, the stack value stored at the bottom of return stack 250 is lost. Other embodiments may handle this situation through other methods.

It is noted that decode units 208 are capable of calculating the ESP value associated with an instruction being decoded in a clock cycle.

Turning now to Figure 3, a block diagram showing a storage location 300 within return stack 250 is depicted. The storage location is configured with at least two fields of information: a return address field 301 and a stored ESP value field 302. Return address field 301 stores a return address, and is 32 bits wide in one embodiment. Stored ESP value field 302 stores the value of the ESP register at the time the associated subroutine call instruction is executed, and is 32 bits wide in one embodiment. Other embodiments may store more or less information within storage location 300. Furthermore, the size of return address field 301 and stored ESP value field 302 may vary from embodiment to embodiment.

Turning now to Figure 4, logic circuits comprising a portion of the prediction circuits mentioned above are shown for one embodiment of branch prediction unit 220. The branch prediction made for a particular cycle is conveyed on a branch prediction bus 404 to instruction cache 204 (shown in Figure 1). The branch prediction address conveyed on branch prediction bus 404 is selected by multiplexor 401 from multiple sources. One of the sources is the return address conveyed on output bus 253 from return stack 250. Other sources vary from embodiment to embodiment and may include branch prediction addresses stored in a branch prediction array (not shown) and a next sequential address provided by instruction cache 204. Also stored in the branch prediction array is a set of selection bits conveyed on selection bit conductors 403. The selection bits indicate which address should be selected as the branch prediction address for the current clock cycle. In one embodiment, two selection bits are used and the encoding of the selection bits which indicates the return stack address is a binary 11.

During clock cycles in which a return stack address is selected for prediction, the return stack address is validated through the use of the ESP_good signal conveyed on ESP_good conductor 255 and the stack empty signal conveyed on stack empty conductor 256. In one embodiment, if the ESP_good signal is asserted (indicating that the ESP value associated with the return address on output bus 253 matches the ESP value of a return instruction currently being decoded) and the stack empty signal is not asserted (indicating that the return address is valid) then the return address is validated for selection. AND gate 400 provides this validation function. The output of AND gate 400 is coupled to multiplexor circuit 401 to select the return address as the address to be conveyed on prediction address bus 404. In one embodiment, if the selection bits indicate selection of the return stack address but the return stack address is not validated (as indicated by AND gate 400), then the next sequential address is selected under the control of prediction control unit 402. Prediction control unit 402 also provides the selection signals to multiplexor circuit 401 for other encodings of the selection bits.

In accordance with the above disclosure a return stack is disclosed which predicts the return address for return instructions. The return stack is not corrupted when fake returns are executed, advantageously retaining its synchronization with the real return instructions in a program. Therefore, the accuracy of return stack predictions for programs which utilize fake return instructions may be comparable to the accuracy of return stack predictions for programs that do not utilize fake return instructions.

Numerous variations and modifications will become apparent to those skilled in the art once the above disclosure is fully appreciated. It is intended that the following claims be interpreted to embrace all such variations and modifications.

## Claims

1. A superscalar microprocessor (200) comprising a branch prediction unit (220) including:
a storage device (250) for storing a plurality of return addresses and a plurality of stack pointer values wherein each one of said plurality of stack pointer values is associated with a particular one of said plurality of return addresses and is indicative of a memory address at which said particular one of said plurality of return addresses is stored in response to a subroutine call instruction;
a stack control unit (251) configured to control a pointer value conveyed on a pointer conductor coupled to said storage device (250) and to said stack control unit (251) wherein said pointer value is indicative of a storage location within said storage device (250); and
a comparator device (254) coupled to said storage device (250) and to a current stack pointer value bus wherein said comparator device (254) is configured to compare one of said plurality of stack pointer values to a current stack pointer value conveyed on said current stack pointer bus, and wherein said one of said plurality of stack pointer values is stored within said storage location indicated by said pointer value.

2. A superscalar microprocessor as claimed in claim 1, wherein said storage location indicated by said pointer value is storing a top return address and a top stack pointer value which are the top of a stack represented within said storage device (250).

3. A superscalar microprocessor as claimed in claim 1, wherein said comparator device (254) is coupled to said stack control unit (251).

4. A superscalar microprocessor as claimed in claim 3, wherein said comparator device (254) is configured to convey an ESP_good signal to said stack control unit (251) and wherein said ESP_ good signal is indicative of equality between said current stack pointer value and said one of said plurality of stack pointer values.

5. A superscalar microprocessor as claimed in claim 4, wherein said stack control unit (251) is configured to receive said ESP_good signal and is configured to control said pointer value such that said one of said plurality of stack pointer values and an associated one of said plurality of return addresses is no longer stored in said storage device (250).

6. A superscalar microprocessor as claimed in claim 1, further comprising a plurality of decode units (208) coupled to said branch prediction unit (220), and wherein said branch prediction unit (220) comprises an input selection device (257, 258) configured to select a first return address from a second plurality of return addresses provided by said plurality of decode units (208).

7. A superscalar microprocessor as claimed in claim 6, wherein said first return address is stored into said storage device (250).

8. A superscalar microprocessor as claimed in claim 6, wherein said input selection device (257, 258) is further configured to select a first stack pointer value from a second plurality of stack pointer values provided by said plurality of decode units (208).

9. A superscalar microprocessor as claimed in claim 8, wherein said first stack pointer value is stored into said storage device (250).

10. A superscalar microprocessor as claimed in claim 1, further comprising a second input selection device (260, 261) coupled to said current stack pointer bus and to a plurality of stack pointer value buses provided by a plurality of decode units (208) wherein said second input selection device is configured to select a second stack pointer value from a second plurality of stack pointer values conveyed on said plurality of stack pointer value buses, and wherein said second stack pointer value is conveyed on said current stack pointer bus.

11. A superscalar microprocessor as claimed in claim 1, further comprising an instruction cache (204) coupled to said branch prediction unit (220) wherein said instruction cache (204) is configured to store a plurality of blocks of instruction bytes.

12. A superscalar microprocessor as claimed in claim 11, wherein said branch prediction unit (220) is configured to convey one of said plurality of return addresses to said instruction cache to (204) fetch one of said plurality of blocks of instruction bytes associated with said one of said plurality of return addresses.

13. A superscalar microprocessor as claimed in claim 12, wherein said one of said return addresses is stored in said storage location indicated by said pointer value.

14. A superscalar microprocessor as claimed in claim 1, further comprising:
an instruction alignment unit (206) coupled to an instruction cache (204) configured to align instructions to a plurality of decode units (208);
said plurality of decode units (208) coupled to said instruction alignment unit (206) configured to decode said instructions provided by said instruction alignment unit (206);
a plurality of reservation stations (210) configured to store decoded instructions provided by said plurality of decode units, wherein each one of said plurality of reservation stations (210) is coupled to a respective one of said decode units (208); and
a plurality of functional units (212) configured to execute said decoded instructions wherein each one of said plurality of functional units (212) is coupled to a respective one of said reservation stations.

15. A method for operating a return stack comprising a storage device (250) for storing a plurality of return addresses and a plurality of stack pointer values wherein each one of said plurality of stack pointer values is associated with a particular one of said plurality of return addresses and is indicative of a memory address at which said particular one of said plurality of return addresses is stored in response to a subroutine call instruction, whereby said return stack correctly predicts return addresses associated with a program executing on a superscalar microprocessor even if the program contains fake return instructions, said method comprising:
storing a stack pointer value associated with a return address when said return address is pushed onto said return stack, wherein said stack pointer value is indicative of a memory address at which said return address is stored in response to a subroutine call instruction;
comparing said stack pointer value to a second stack pointer value conveyed with a stack pop command; and
popping said return stack if said comparing indicates equality.

16. A method as claimed in claim 15, further comprising ignoring said stack pop command if said comparing indicates inequality.

## Patentansprüche

1. Superskalarer Mikroprozessor (200) mit einer Verzweigungsvorhersageeinheit (220), mit
einer Speichervorrichtung (250) zum Speichern mehrerer Rückkehradressen und mehrerer Stackzeigerwerte, wobei jeder der mehreren Stackzeigerwerte einer bestimmten Rückkehradresse zugeordnet ist und eine Speicheradresse angibt, an der die bestimmte der mehreren Rückkehradressen in Reaktion auf einen Subroutinenabrufbefehl gespeichert wird,
einer Stacksteuereinheit (251) zum Steuern eines Zeigerwerts, der auf einem mit der Speichervorrichtung (250) und der Stacksteuereinheit (251) verbundenen Zeigerleiter übertragen wird, wobei der Zeigerwert eine Speicherstelle in der Speichervorrichtung (250) angibt, und
einer Komparatorvorrichtung (254), die mit der Speichervorrichtung (250) und einem Bus für den aktuellen Stackzeigerwert verbunden ist, wobei die Komparatorvorrichtung (254) zum Vergleichen eines der mehreren Stackzeigerwerte mit dem auf dem Bus für den aktuellen Stackzeigerwert übertragenen aktuellen Stackzeigerwert ausgebildet ist, und wobei der eine der mehreren Stackspeicherwerte an der von dem Zeigerwert angegebenen Speicherstelle gespeichert wird.

2. Superskalarer Mikroprozessor nach Anspruch 1, bei dem die von dem Zeigerwert angegebene Speicherstelle eine obere Rückkehradresse und einen oberen Stackzeigerwert speichert, welche das obere Ende eines in der Speichervorrichtung (350) wiedergegebenen Stacks bilden.

3. Superskalarer Mikroprozessor nach Anspruch 1, bei dem die Komparatorvorrichtung (254) mit der Stacksteuereinheit (251) gekoppelt ist.

4. Superskalarer Mikroprozessor nach Anspruch 3, bei dem die Komparatorvorrichtung (254) derart ausgebildet ist, daß sie ein ESP-Good-Signal an die Stacksteuereinheit (251) überträgt, und wobei das ESP-Good-Signal die Gleichheit zwischen dem aktuellen Stackzeigerwert und dem einen der mehreren Stackzeigerwerte angibt.

5. Superskalarer Mikroprozessor nach Anspruch 4, bei dem die Stacksteuereinheit (251) konfiguriert ist, das ESP-Good-Signal zu empfangen und den Zeigerwert derart zu steuern, daß der eine der mehreren Stackzeigerwerte und eine zugehörige der mehreren Rückkehradressen nicht länger in der Speichervorrichtung (250) gespeichert sind.

6. Superskalarer Mikroprozessor nach Anspruch 1, ferner mit mehreren Dekodiereinheiten (208), die mit der Verzweigungsvorhersageeinheit (220) verbunden sind, und wobei die Verzweigungsvorhersageeinheit (220) eine Eingangswählvorrichtung (257, 258) aufweist, die zum Auswählen einer ersten Rückkehradresse aus einer von den mehreren Dekodiereinheiten (208) gelieferten zweiten Vielzahl von Rückkehradressen ausgebildet ist.

7. Superskalarer Mikroprozessor nach Anspruch 6, bei dem die erste Rückkehradresse in der ersten Speichervorrichtung (250) gespeichert wird.

8. Superskalarer Mikroprozessor nach Anspruch 6, bei dem die Eingangswählvorrichtung (257, 258) ferner zum Auswählen eines ersten Stackzeigerwerts aus einer von den mehreren Dekodiereinheiten (208) gelieferten zweiten Vielzahl von Stackzeigerwerten ausgebildet ist.

9. Superskalarer Mikroprozessor nach Anspruch 8, bei dem der erste Stackzeigerwert in der Speichervorrichtung (250) gespeichert wird.

10. Superskalarer Mikroprozessor nach Anspruch 1, ferner mit einer zweiten Eingangswählvorrichtung (260, 261), die mit dem Bus für den aktuellen Stackzeiger und mit mehreren Bussen für Stackzeigerwerte verbunden ist, welche von mehreren Dekodiereinheiten (208) kommen, wobei die zweite Eingangswählvorrichtung konfiguriert ist, einen zweiten Stackzeigerwert aus einer zweiten Vielzahl von Stackzeigerwerten, die auf den mehreren Bussen für Stackzeigerwerte übertragen werden, einen zweiten Stackzeigerwert zu wählen, und wobei der zweite Stackzeigerwert auf dem Bus für den aktuellen Stackzeiger übertragen wird.

11. Superskalarer Mikroprozessor nach Anspruch 1, ferner mit einem mit der Verzweigungsvorhersagevorrichtung (220) verbundenen Befehlscache (204), der zum Speichern mehrerer Blöcke von Befehls-Bytes ausgebildet ist.

12. Superskalarer Mikroprozessor nach Anspruch 11, bei dem die Verzweigungsvorhersageeinheit (220) zum Übertragen einer der mehreren Rückkehradressen an den Befehlscache (204) konfiguriert ist, um einen der mehreren Befehls-Byteblöcke, die mit der einen der mehreren Rückkehradressen verbunden sind, zu holen.

13. Superskalarer Mikroprozessor nach Anspruch 12, bei dem die eine der Rückkehradressen an der durch den Zeigerwert angegebenen Stelle gespeichert wird.

14. Superskalarer Mikroprozessor nach Anspruch 1, ferner mit
einer mit einem Befehlscache (204) verbundenen Befehlsverteilungseinheit (206), die zum Verteilen von Befehlen an mehrere Dekodiereinheiten (208) konfiguriert ist;
wobei die mit der Befehlsausrichteinheit (206) verbundenen mehreren Dekodiereinheiten (208) zum Dekodieren der von der Befehlsverteilungseinheit (206) gelieferten Befehle ausgebildet sind;
mehreren Haltestationen (210) zum Speichern von durch die mehreren Dekodiereinheiten gelieferten dekodierten Befehlen, wobei jede der mehreren Haltestationen (210) mit einer jeweiligen Dekodiereinheit (208) verbunden ist, und
mehreren Funktionseinheiten (212), die zum Ausführen der dekodierten Befehle ausgebildet sind, wobei jede der mehreren Funktionseinheiten (212) mit einer jeweiligen Haltestation verbunden ist.

15. Verfahren zum Betreiben eines RückkehrStacks mit einer Speichervorrichtung zum Speichern mehrerer Rückkehradressen und mehrerer Stackzeigerwerte, wobei jeder der mehreren Stackzeigerwerte einer bestimmten der mehreren Rückkehradressen zugeordnet ist und eine Speicheradresse angibt, an der die bestimmte der mehreren Rückkehradressen in Reaktion auf einen Subroutinenabrufbefehl gespeichert wird, wobei der RückkehrStack Rückkehradressen, die einem auf dem superskalaren Mikroprozessor ausgeführten Programm zugeordnet sind, korrekt vorhersagt, selbst wenn das Programm falsche Rückkehrbefehle enthält, wobei das Verfahren die folgenden Schritte aufweist:
Speichern eines einer Rückkehradresse zugeordneten Stackzeigerwertes, wenn die Rückkehradresse in den RückkehrStack geschoben wird, wobei der Stackzeigerwert eine Speicheradresse angibt, an der die Rückkehradresse in Reaktion auf einen Subroutinenabrufbefehl gespeichert wird;
Vergleichen des Stackzeigerwerts mit einem zweiten Stackzeigerwert, der mit einem Stackaufgreifbefehl übertragen wird; und
Entnehmen des Rückkehrstacks, wenn der Vergleich Gleichheit ergibt.

16. Verfahren nach Anspruch 15, ferner mit dem Schritt des Ignorierens des Stackaufgreifbefehls, wenn der Vergleich Ungleichheit ergibt.

## Revendications

1. Microprocesseur superscalaire (200) comportant une unité de prédiction de branchement (220) comprenant :
un dispositif de mémoire (250) pour stocker une pluralité d'adresses de retour et une pluralité de valeurs de pointeur de pile dans lequel chaque valeur de ladite pluralité de valeurs de pointeur de pile est associée à une adresse particulière de ladite pluralité d'adresses de retour et est indicatrice d'une adresse de mémoire à laquelle ladite adresse particulière de ladite pluralité d'adresses de retour est stockée en réponse à une instruction d'appel de sous-programme ;
une unité de commande de pile (251) configurée pour commander une valeur de pointeur acheminée sur un conducteur de pointeur couplé audit dispositif de mémoire (250) et à ladite unité de commande de pile (251) dans laquelle ladite valeur de pointeur est indicatrice d'une position de mémoire à l'intérieur dudit dispositif de mémoire (250) ; et
un dispositif comparateur (254) couplé audit dispositif de mémoire (250) et à un bus de valeur de pointeur de pile courante dans lequel ledit dispositif comparateur (254) est configuré pour comparer l'une de ladite pluralité de valeurs de pointeur de pile à une valeur courante de pointeur de pile acheminée sur ledit bus de pointeur de pile courant, et dans lequel ladite valeur de ladite pluralité de valeurs de pointeur de pile est stockée à ladite position de mémoire indiquée par ladite valeur de pointeur.

2. Microprocesseur superscalaire selon la revendication 1, dans lequel ladite position de mémoire indiquée par ladite valeur de pointeur stocke une adresse de retour supérieure et une valeur de pointeur de pile supérieure qui correspondent au sommet d'une pile représentée à l'intérieur dudit dispositif de mémoire (250).

3. Microprocesseur superscalaire selon la revendication 1, dans lequel ledit dispositif comparateur (254) est couplé à ladite unité de commande de pile (251).

4. Microprocesseur superscalaire selon la revendication 3, dans lequel ledit dispositif comparateur (254) est configuré pour acheminer un signal ESP-good , à ladite unité de commande de pile (251) et dans lequel ledit signal d'ESP-good indique une égalité entre ladite valeur de pointeur de pile courante et ladite valeur de ladite pluralité de valeurs de pointeur de pile.

5. Microprocesseur superscalaire selon la revendication 4, dans lequel ladite unité de commande de pile (251) est configurée pour recevoir ledit signal d'ESP-good et est configurée pour commander ladite valeur de pointeur de telle façon que ladite valeur de ladite pluralité de valeurs de pointeur de pile et une adresse associée de ladite pluralité des adresses de retour ne sont plus stockées dans ledit dispositif de mémoire (250).

6. Microprocesseur superscalaire selon la revendication 1, comprenant, de plus, une pluralité d'unités de décodage (208) couplée à ladite unité de prédiction de branchement (220), et dans lequel ladite unité de prédiction de branchement (220) comprend un dispositif de sélection d'entrée (257, 258) configuré pour sélectionner une première adresse de retour à partir d'une seconde pluralité d'adresses de retour fournies par ladite pluralité d'unités de décodage (208).

7. Microprocesseur superscalaire selon la revendication 6, dans lequel ladite première adresse de retour est stockée dans ledit dispositif de mémoire (250).

8. Microprocesseur superscalaire selon la revendication 6, dans lequel ledit dispositif de sélection d'entrée (257, 258) est configuré, de plus, pour sélectionner une première valeur de pointeur de pile à partir d'une seconde pluralité de valeurs de pointeur de pile fournies par ladite pluralité d'unités de décodage (208).

9. Microprocesseur superscalaire selon la revendication 8, dans lequel ladite première valeur de pointeur de pile est stockée dans ledit dispositif de mémoire (250).

10. Microprocesseur superscalaire selon la revendication 1, comprenant, de plus, un second dispositif de sélection d'entrée (260, 261) couplé audit bus de pointeur de pile courant et à une pluralité de bus de valeurs de pointeur de pile fournie par une pluralité d'unités de décodage (208) dans lequel ledit second dispositif de sélection d'entrée est configuré pour sélectionner une seconde valeur de pointeur de pile à partir d'une seconde pluralité de valeurs de pointeur de pile acheminées sur ladite pluralité de bus de valeurs de pointeur de pile, et dans lequel ladite seconde valeur de pointeur de pile est acheminée sur ledit bus de pointeur de pile courant.

11. Microprocesseur superscalaire selon la revendication 1, comprenant, de plus, une antémémoire d'instructions (204) couplée à ladite unité de prédiction de branchement (220) dans lequel ladite antémémoire d'instructions (204) est configurée pour stocker une pluralité de blocs de multiplets d'instructions.

12. Microprocesseur superscalaire selon la revendication 11, dans lequel ladite unité de prédiction de branchement (220) est configurée pour acheminer l'une de ladite pluralité d'adresses de retour vers ladite antémémoire d'instructions (204) en vue d'extraire l'un de ladite pluralité de blocs de multiplets d'instructions associé à ladite adresse de ladite pluralité d'adresses de retour.

13. Microprocesseur superscalaire selon la revendication 12, dans lequel ladite adresse desdites adresses de retour est stockée dans ladite position de mémoire indiquée par ladite valeur de pointeur.

14. Microprocesseur superscalaire selon la revendication 1, comprenant, de plus :
une unité d'alignement d'instruction (206) couplée à une antémémoire d'instructions (204) configurée pour aligner des instructions destinées à une pluralité d'unités de décodage (208),
ladite pluralité d'unités de décodage (208) couplée à ladite unité d'alignement d'instructions (206) configurée pour décoder lesdites instructions fournies par ladite unité d'alignement d'instruction (206) ;
une pluralité de stations de réservation (210) configurée pour stocker des instructions décodées fournies par ladite pluralité d'unités de décodage, dans laquelle chacune de ladite pluralité de stations de réservation (210) est couplée à une unité respective desdites unités de décodage (208) ; et
une pluralité d'unités fonctionnelles (212) configurée pour exécuter lesdites instructions décodées dans laquelle chacune de ladite pluralité d'unités fonctionnelles (212) est couplée à une station respective desdites stations de réservation.

15. Procédé de fonctionnement d'une pile d'adresses de retour comprenant un dispositif de stockage (250) pour stocker une pluralité d'adresses de retour et une pluralité de valeurs de pointeur de pile dans lequel chacune de ladite pluralité de valeurs de pointeur de pile est associée à une adresse particulière de ladite pluralité d'adresses de retour et est indicatrice d'une adresse de mémoire à laquelle ladite adresse particulière de ladite pluralité d'adresses de retour est stockée en réponse à une instruction d'appel de sous-programme, de façon que ladite pile d'adresses de retour prédise correctement les adresses de retour associées à un programme s'exécutant sur un microprocesseur superscalaire même si le programme contient des instructions de retour simulées, ledit procédé consistant à :
stocker une valeur de pointeur de pile associée à une adresse de retour lorsque ladite adresse de retour est empilée sur ladite pile d'adresses de retour, dans lequel ladite valeur de pointeur de pile est indicatrice d'une adresse de mémoire à laquelle ladite adresse de retour est stockée en réponse à une instruction d'appel de sous-programme ;
comparer ladite valeur de pointeur de pile à une seconde valeur de pointeur de pile acheminée avec une commande de dépilage de pile ; et
dépiler ladite pile d'adresses de retour si ladite comparaison indique une égalité.

16. Procédé selon la revendication 15, consistant, de plus, à ignorer ladite commande de dépilage de pile si ladite comparaison indique une inégalité.
